# EUROPÄISCHE PATENTSCHRIFT

(11) **EP 1 695 912 B1**
(45) Veröffentlichungstag und Bekanntmachung des Hinweises auf die Patenterteilung: **22.04.2009**
(21) Anmeldenummer: 06003125.9
(22) Anmeldetag: 16.02.2006
(51) Int. Cl.: B65B 1/36, B65B 1/16, G01F 11/28

(54) **Dosiervorrichtung für körnige Schüttgüter**
Metering unit for granular bulk materials
Dispositif de dosage pour matériaux granulaires

(30) Priorität: 24.02.2005 DE 202005003161 U
(43) Veröffentlichungstag der Anmeldung: 30.08.2006
(73) Patentinhaber: Harro Höfliger Verpackungsmaschinen GmbH, 71573 Allmersbach im Tal (DE)
(72) Erfinder: Meyer, Hermann, 71404 Korb (DE)
(74) Vertreter: Müller, Hans

(56) Entgegenhaltungen:
- DE-U1- 20 309 279
- DE-U1-4202004 008 05
- GB-A- 1 309 424
- US-A1- 2005 023 288

## Beschreibung

### TECHNISCHES GEBIET

Die Erfindung betrifft eine Vorrichtung, mittels der körnige Schüttgüter wie beispielsweise Pulver, Granulate oder Pellets dosiert abgefüllt werden können. Die jeweils in einzelne Behältnisse abgefüllten Mengen an solchen Schüttgütern müssen ein vorbestimmtes, möglichst konstant großes Volumen besitzen.

Die Dosiervorrichtungen können in Dosierröhrchen oder Dosierwalzen ausgebildete Dosierkammern aufweisen. Während ein Dosierröhrchen beim Befüllen regelmäßig in ein Füllgutbett hineingesteckt wird, werden die am äußeren Umfang einer Dosierwalze regelmäßig zu mehreren verteilt vorhandenen Dosierkammern nacheinander aus einem Vorratsbehälter heraus befüllt. Zum Entleeren wird das Dosierröhrchen zu einem Behältnis gebracht und die in dem Dosierröhrchen vorhandenen Dosis an Schüttgut in das Behältnis entleert. Zum Entleeren wird die Dosierwalze in eine entsprechende Rotationsstellung gedreht und das in ihrer jeweiligen Dosierkammer befindliche Schüttgut mittels Überdruck in ein bereitstehendes Behältnis hineingeblasen.

Von solchen Dosiervorrichtungen wird erwartet, dass die Dosierung des Schüttgutes zu möglichst exakt gleichen Ergebnissen führt. Dabei soll das Schüttgut möglichst schonend behandelt werden.

### STAND DER TECHNIK

Aus der DE 203 09 279 U1 ist eine Filterkolbenvorrichtung in Gestalt eines Dosierröhrchens zum Abfüllen von pulvrigem Schüttgut bekannt. Das Dosierröhrchen wird zum Befüllen in ein in Ruhe befindliches Schüttgutbett mit seinem offenen unteren Endbereich hineingesteckt. Durch ein zurückversetzt in dem Dosierröhrchen vorhandenes Filtermedium hindurch wird dann Schüttgut aus dem Schüttgutbett in das Dosierröhrchen hineingesaugt. Das Dosierröhrchen wird anschließend aus dem Schüttgutbett nach oben herausgezogen und über einem Behältnis so positioniert, dass durch Anlegen eines Überdruckes durch das Filtermedium hindurch die eingesaugte Schüttgutmenge aus dem Dosierröhrchen in das Behältnis hineingeblasen werden kann. Vor dem Herausziehen des Dosierröhrchens aus dem Schüttgutbett kann das Dosierröhrchen zunächst einmal in dem Schüttgutbett seitlich verschoben werden, um zu versuchen, das an seinem Mündungsrand anhaftende Schüttgut zu entfernen.

In der GB 1 309 424 wird ein Dosierröhrchen offenbart, das mit seinem offenen unteren Endbereich in Schüttgut eingetaucht wird. Mittels Anlegen eines Unterdrucks wird Schüttgut in das Dosierröhrchen hineingesaugt. Nach Herausziehen des Dosierröhrchens aus dem Schüttgut kann durch Anlegen eines Überdrucks die eingesaugte Schüttgutmenge in ein bereitstehendes Behältnis entleert werden. Darüber hinaus wird eine Dosiervorrichtung offenbart, bei der die Dosierkammer einer Walze mit pulvrigem Füllgut befüllt wird. Durch Rotation der Dosierwalze gelangt die Dosierkammer in befülltem Zustand in den Endbereich des Füllgutbehälters, wo überschüssiges Füllgut durch einen Gasstrom vom Endbereich der Dosierkammer abgestreift wird. Anschließend wird die Dosierkammer in ein bereitstehendes Behältnis entleert.

### DARSTELLUNG DER ERFINDUNG

Ausgehend von diesem Stand der Technik liegt der Erfindung die Aufgabe zugrunde, eine Dosiervorrichtung für körnige Schüttgüter wie beispielsweise Pulver, Granulate oder Pellets anzugeben, mit der möglichst konstant große Mengen an Schüttgut abgefüllt werden können. Dabei soll die Dosiervorrichtung schonend auf das Schüttgut einwirken. In wirtschaftlicher Hinsicht ist darüber hinaus eine einfache Dosiermengenverstellung und eine leicht zu reinigende Bauweise des Dosierröhrchens erstrebenswert.

Diese Erfindung ist durch die Merkmale des Anspruchs 1 gegeben. Sinnvolle Weiterbildungen der Erfindung sind Gegenstand von sich daran anschließenden weiteren Ansprüchen.

Ausgehend von einer bekannten Dosiervorrichtung mit einem Dosierröhrchen, bei dem das Schüttgut beim Befüllvorgang und Entleervorgang in jeweils unterschiedlichen Richtungen in das Dosierröhrchen hinein- beziehungsweise aus demselben herausfließt, zeichnet sich die Erfindung unter anderem dadurch aus, dass die Abgrenzung des in das Dosierröhrchen hineingesaugten Schüttgutes von dem nicht eingesaugten Schüttgut durch einen Blasstrom im Mündungsbereich des Dosierröhrchens erzeugt wird. Dieser Blasstrom, der durch eine das Dosierröhrchen umfassende Ringdüse erzeugt werden kann, bewirkt eine reproduzierbar gleiche Abgrenzung des eingesaugten Schüttgutes von dem im Schüttgutbett verbleibenden Schüttgut, und zwar auf eine für das Schüttgut besonders schonende Weise. Dieses exakte Abgrenzen wird dabei unterstützt durch eine gleichzeitig stattfindende horizontale Relativbewegung zwischen dem Dosierröhrchen und dem Schüttgutbett.

Die Ringdüse kann fest oder lösbar an dem Dosierröhrchen angebracht sein. So ist es möglich, das Dosierröhrchen zusammen mit der Ringdüse zwischen dem Schüttgutbett und dem jeweils zu befüllenden Behältnis hin- und herzubewegen; es ist aber auch möglich, das Dosierröhrchen ohne die Ringdüse zu dem zu befülllenden Behältnis hinzubewegen, das Dosierröhrchen dort zu entleeren und dann wieder zurückzubewegen. Im letzteren Zustand ist zumindest während des Zustandes, in dem das Dosierröhrchen aus dem Schüttgutbett Schüttgut ansaugt, die Ringdüse ebenfalls in dem Schüttgut vorhanden. Dabei ist es auch möglich, die Ringdüse während des Entleerens des Dosierröhrchens aus dem Schüttgutbett herauszuheben, um es beispielsweise von an seiner Außenseite anhaftendem Schüttgut zu befreien. Dieses Schüttgut könnte mit mechanischen Abstreifeinrichtungen oder gegebenenfalls auch mittels Blasluft von der Außenseite der Ringdüse entfernt werden. Dieses von der Ringdüse abfallende Schüttgut würde wieder in das Schüttgutbett zurückfallen und damit nicht verloren gehen oder die Umgebung oder andere Maschinenteile verschmutzen können.

Wie die Zeichung beispielhaft verdeutlicht, kann das Dosierröhrchen zumindest in seinem Rohrbereich, der zur Ausbildung unterschiedlich großer Dosierkammern vorgesehen ist, mit einem gleich großen Querschnitt längs seiner Rohrachse ausgebildet sein. Auf diese Weise kann das das Dosiervolumen abgrenzende Filtermedium problemlos längs der Rohrachse verschoben werden, so dass auf einfache Weise unterschiedlich große Dosierkammern und damit Dosiervolumen bereitgestellt beziehungsweise hergestellt werden können.

Das Filtermedium kann aus einem Werkstoff hergestellt sein, bei dem die Filteröffnungen durch Erodieren hergestellt werden. Entsprechende Herstellverfahren sind wirtschaftlich und technisch sehr interessant zum Herstellen der erforderlichen für Gas durchlässigen, für die Schüttgüter dagegen nicht durchlässigen, sehr kleinen Filteröffnungen.

Das Vorsehen einer Ringdüse ist im Zusammenhang mit Dosiervorrichtungen in der DE 20 2004 008 054 U1 erwähnt, allerdings in einem anderen technologischen Zusammenhang. Ein Dosierröhrchen wird während seines Befüllens und wieder Entleerens in derselben Strömungsrichtung, von oben nach unten, durchströmt. Das Befüllen erfolgt aus einem oberhalb des Dosierröhrchens platzierten Vorratsbehälter heraus. Am unteren Ende des Dosierröhrchens kann sein Querschnitt durch eine schwenkbare Klappe verschlossen oder geöffnet werden. Im mittleren Bereich dieses Dosierröhrchens kann mittels einer speziellen, durch die Rohrwandung des Dosierröhrchens hindurch bewirkten Saugtechnik ein Schüttgut-Pfropfen erzeugt werden. Das zwischen dem Pfropfen und der unteren Klappe vorhandene Schüttgut stellt die abzufüllende Dosiermenge an Schüttgut dar. Um das Herausströmen dieser Dosiermenge aus dem Dosierröhrchen zu erleichtern, ist unterhalb des Pfropfens, etwa im mittleren Bereich zwischen demselben und der unteren Klappe eine Ringdüse angebracht. Durch Blasen von Gas aus dieser Ringdüse in das Innere des Dosierröhrchens hinein wird das Entleeren des in diesem Bereich vorhandenen Schüttgutes unterstützt. Die Ringdüse dient damit nicht zum Herstellen einer Trennfuge zwischen dem jeweiligen Dosiervolumen und dem nicht zu diesem Dosiervolumen gehörenden Schüttgut.

Weitere Ausgestaltungen und Vorteile der Erfindung sind den in den Ansprüchen ferner aufgeführten Merkmalen sowie den in der Zeichnung dargestellten Ausführungsbeispielen zu entnehmen.

### KURZE BESCHREIBUNG DER ZEICHNUNG

Die Erfindung wird im Folgenden anhand der in der Zeichnung dargestellten Ausführungsbeispiele näher beschrieben und erläutert. Es zeigen:
- Fig. 1: einen schematisierten Längsschnitt durch den unteren Endbereich des Dosierröhrchens einer Dosiervorrichtung nach der Erfindung,
- Fig. 2 bis 7: verschiedene Verfahrenszustände der Dosiervorrichtung nach Fig. 1 während des Befüllens und wieder Entleerens seines Dosierröhrchens,
- Fig. 8: eine zweite Ausführungsform einer Dosiervorrichtung nach der Erfindung, bei der nach der Befüllung seines Dosierröhrchens dasselbe von der Ringdüse separierbar ist,
- Fig. 9: eine Darstellung ähnlich der von Fig. 7, während des Entleerens des ohne Ringdüse über dem zu befüllenden Behältnis positionierten Dosierröhrchens.

### WEGE ZUM AUSFÜHREN DER ERFINDUNG

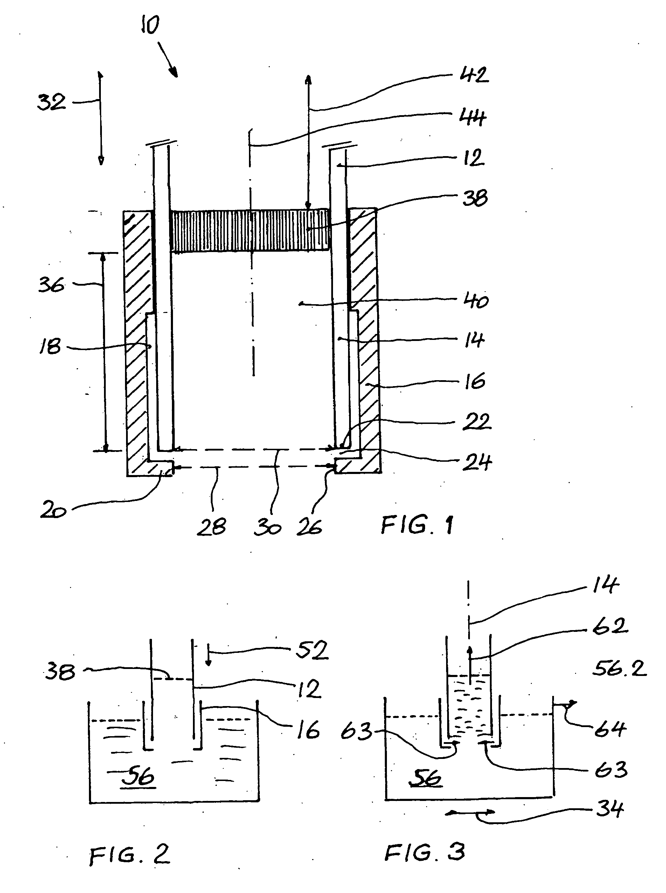

Von einer Dosiervorrichtung 10 ist in Fig. 1 der untere Endbereich 14 seines Dosierröhrchens 12 dargestellt. Das einen kreiszylindrischen, geraden Querschnitt aufweisende Dosierröhrchen 12 ist an seinem unteren Endbereich 14 von einer Ringdüse 16 umgeben. Die Ringdüse besitzt einen inneren Ringraum 18. Die etwa hülsenförmige Ringdüse 16 begrenzt den Ringraum 18 nach außen. Außerdem begrenzt sie den Ringraum 18 nach unten im Abstand durch eine ringförmige Umbiegung 20. Zwischen der Umbiegung 20 und dem unteren Ende 22 des Dosierröhrchens 12 ist ein Ringspalt 24 vorhanden. Der von der inneren Stirnseite 26 der Umbiegung 20 umschlossene und eingerahmte Querschnittsbereich 28 ist im vorliegenden Fall gleich groß wie der Querschnittsbereich 30 im Bereich des unteren Endes 22 des Dosierröhrchens 12. Der Querschnittsbereich 28 könnte auch etwas größer als der Querschnittsbereich 30 sein.

Der Ringraum 18 ist über eine Gasleitung an eine Gasversorgungsquelle angeschlossen, was in der Zeichnung nicht dargestellt ist. Es kann somit Gas wie beispielsweise Luft aus dem Ringspalt 24 herausgeblasen werden. Die Blasrichtung ist quer zur Längsachse, das heißt, in Querrichtung 34.

Das Dosierröhrchen 12 kann insgesamt nach unten und oben, in Richtung des Doppelpfeils 32, bewegt werden, um es in ein Schüttgutbett hineintauchen zu lassen beziehungsweise wieder aus demselben rückwärts herauszuziehen.

Innerhalb des Dosierröhrchens 12, in einem Abstand 36 von seinem unteren Ende 22, ist sein Querschnitt durch ein Filtermedium 38 verschlossen. Dieses Filtermedium 38 ist gasdurchlässig, für das zu handhabende Schüttgut dagegen nicht durchlässig. Durch das Filtermedium 38 kann durch einen an der rückwärtigen Seite des Filtermediums 38 herrschenden Gasunterdruck ein entsprechender Unterdruck im Innenraum 40 erzeugt werden, der im Endbereich 14 des Dosierröhrchens 12, in axialer Richtung zwischen dem Filtermedium 38 und dem unteren Ende 22 zwischen der Wandung des Dosierröhrchens 12 und darüber hinaus auch noch - in Fig. 1- unterhalb der Ringdüse 16 wirksam ist. Das Filtermedium 38 kann, wie Doppelpfeile 42 andeuten, in Richtung der Längsachse 44 des Dosierröhrchens 12 verschoben und dadurch der Innenraum 40 verkleinert oder vergrößert werden.

Zum Befüllen des Innenraumes 40 mit Schüttgut 56 (Fig. 1) wird das Dosierröhrchen (12) (Fig. 2) zusammen mit der an ihm befestigten Ringdüse 16 von oben nach unten (Pfeil 52) in ein mit Schüttgut 56 gefülltes wannenartiges Gefäß 60 ein Stück weit hineingetaucht. Im eingetauchten Zustand ragt die Ringdüse 16 aus dem Schüttgut 56 oben heraus.

Anschließend wird Schüttgut 56 in den Innenraum 40 eingesaugt, was durch Anlegen eines entsprechenden Unterdruckes (Unterdruckpfeil 62) auf der zum Innenraum entgegengesetzten Außenseite des Filtermediums 38 verwirklicht wird (Fig. 3).

Sobald der Innenraum 40 mit Schüttgut 56.2 vollgefüllt ist, wird aus dem Ringspalt 24 der Ringdüse 16 Gas, wie im vorliegenden Fall Luft, herausgeblasen (Strömungspfeile 63). Gleichzeitig wird das Gefäß 60 mit dem Schüttgut 56 in zur Rohr-Längsachse 44 senkrechter - bei der Darstellung gemäß Fig. 3 in horizontaler - Richtung gemäß Bewegungspfeil 64 bewegt. Der Bewegungspfeil 64 ist in Querrichtung 34 (Fig. 3) ausgerichtet. Das Dosierröhrchen 12 bleibt zusammen mit der an ihm befestigten Ringdüse 16 dabei in Ruhe. Durch diese horizontale Relativbewegung zwischen dem unteren Ende 22 (Fig. 1) des Dosierröhrchens 12 und dem Schüttgut 56 einerseits und durch das gleichzeitige Ausblasen von Luft aus dem Ringspalt 24 andererseits findet eine sichere Abgrenzung des im Innenraum 40 vorhandenen Schüttgutes 56.2 von dem im Gefäß 60 vorhandenen Schüttgutes 56 statt.

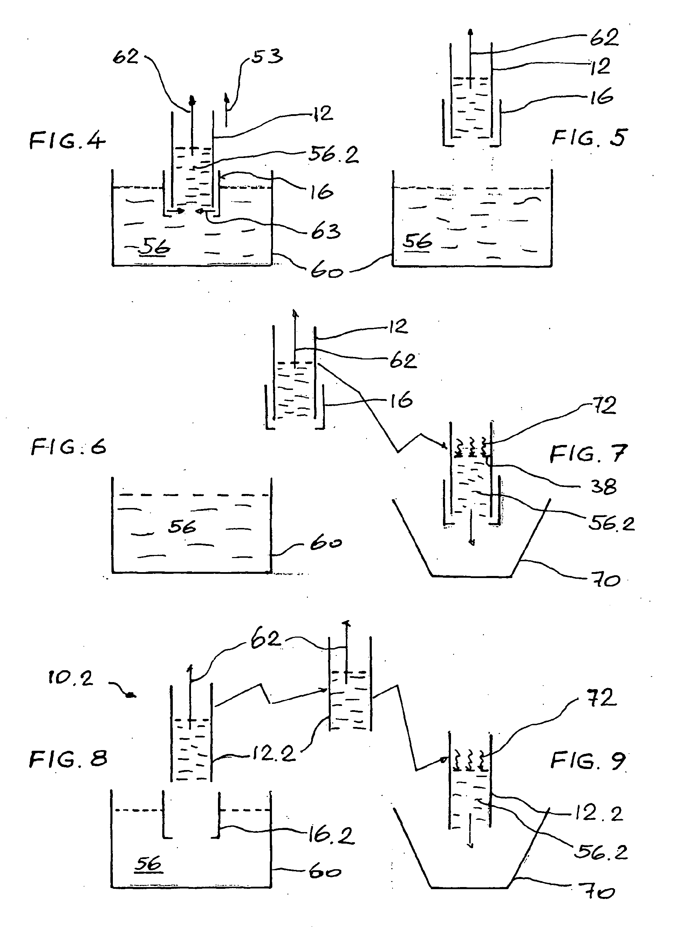

Anschließend wird gemäß Fig. 4 das mit Schüttgut 56.2 gefüllte Dosierröhrchen 12 zusammen mit der an seinem unteren Ende - im vorliegenden Fall- befestigten Ringdüse 16 aus dem Schüttgut 56 des Gefäßes 60 nach oben herausgezogen (Pfeil 53). Der Unterdruck 62 wird dabei aufrechterhalten ebenso wie das Luftausblasen 63 aus der Ringdüse 16 heraus. Im vollständig aus dem Pulverbett 56 nach oben herausgezogenen Zustand wird keine Luft mehr aus der Ringdüse 16 ausgeblasen. Der durch das Filtermedium wirkende Unterdruck (Unterdruckpfeil 62) wird aufrechterhalten (Fig. 5).

Anschließend (Fig. 6) wird dann das Dosierröhrchen 12 zusammen mit der Ringdüse 18 so an der Öffnung eines Behältnisses 70 positioniert, dass das in dem Innenraum 40 vorhandene Schüttgut 56.2 in dieses Behältnis 70 hinein entleeert werden kann (Fig. 7). Zum Entleeren wirkt an der Rückseite des Filtermediums 38 ein Überdruck in wechselnder Stärke. Es wird gleichsam eine Luftdruckschwingung 72 erzeugt, um ein möglichst schonendes Herausfallen des Schüttgutes 56.2 aus dem Dosierröhrchen 12 zu ermöglichen, und zwar mit möglichst geringer Blaswirkung. Es darf nämlich das in das Behältnis 70 bereits hereingefallene Schüttgut 56.2 nicht aus dem Behältnis 70 wieder herausgeblasen werden.

Bei der Fig. 8 und 9 ist eine ausschnittsweise Dosiervorrichtung 10.2 dargestellt, bei der das Dosierröhrchen 12.2 von der Ringdüse 16.2 gelöst werden kann. Der Befüllzustand dieses Dosierröhrchens 12.2, das im Übrigen dem Dosierröhrchen 12 entspricht, erfolgt in der vorstehend bereits erwähnten Art und Weise. Nach seinem Befüllen wird lediglich das Dosierröhrchen 12.2 aus dem im Gefäß 60 vorhandenen Schüttgut 56 nach oben herausgezogen. Die Ringdüse 16.2 verbleibt im Schüttgutbett des Schüttgutes 56. Anschließend wird dann das Dosierröhrchen 12.2, ebenso wie es beim Dosierröhrchen 12 beschrieben ist, in das Behältnis 70 hinein entleert. Während des Transportes zu dem Behältnis 70 wird die Ringdüse an sich nicht benötigt, da keine Blasluft aus derselben heraustreten muss. Es kann daher nur das Dosierröhrchen 12.2 alleine von dem Gefäß 60 zu dem Behältnis 70, und umgekehrt, transportiert werden.

Sollte sich während der Relativbewegung zwischen dem Dosierröhrchen und dem Schüttgut 56 an der Außenseite der Ringdüse 16.2 Schüttgut 56 ansammeln und anhaften bleiben, könnte die Ringdüse 16.2 auch aus dem Schüttgut 56 nach oben herausgezogen werden. Allerdings könnte auch dann der Weitertransport des Dosierröhrchens 12.2 zum Behältnis 70 ohne diese Ringdüse 16.2 erfolgen, so wie dies in Fig. 9 dargestellt ist. Die Ringdüse könnte oberhalb des Gefäßes 60 in Wartestellung verbleiben. An der Ringdüse 16.2 anhaftendes Schüttgut könnte mit mechanischen oder sonstigen Mitteln von derselben entfernt werden. Dieses entfernte Schüttgut würde wieder in das Gefäß 60 zurückfallen und könnte dem weiteren Abfüllprozess unverändert zur Verfügung stehen.

## Patentansprüche

1. Dosiervorrichtung (10, 10.2) für körnige Schüttgüter (56) wie beispielsweise Pulver, Granulate oder Pellets
- mit einem Dosierröhrchen (12, 12.2), das zum Befüllen mit einer dosierten Menge (56.2) von solchem Schüttgut mit seinem offenen einen Endbereich (14) in Schüttgut (56) eintauchbar ist,
- mit einer Einrichtung zum Hineinsaugen von Schüttgut (56.2) in den Endbereich (14) des Dosierröhrchens,
- mit einer Einrichtung zum Erzeugen einer Relativbewegung (64) zumindest im eingetauchten Zustand des Dosierröhrchens (12,12.2) zwischen dem Dosierröhrchen (12, 12.2) und dem Schüttgut (56) in zur Längsachse (44) des Dosierröhrchens Querrichtung,
- wobei das Schüttgut (56) beim Befüllen des Dosierröhrchens in einer ersten Fließrichtung in dasselbe hineinströmt und beim Entleeren in der dazu umgekehrten Fließrichtung aus dem Dosierröhrchen herausströmt, **dadurch gekennzeichnet dass** zumindest im eingetauchten Zustand des Dosierröhrchens eine Ringdüse zum Blasen eines gasförmigen Mediums zumindest im Bereich des unteren Endes (22) des Endbereiches (14) so vorhanden ist, dass ein Blasstrom in zur Längsachse (44) des Dosierröhrchens Querrichtung (34) erzeugbar ist.

2. Dosiervorrichtung nach Anspruch 1,
- **dadurch gekennzeichnet, dass**
- zumindest im eingetauchten Zustand des Dosierröhrchens die Ringdüse relativ zum Dosierröhrchen unverrückbar an demselben vorhanden ist.

3. Dosiervorrichtung nach einem der vorstehenden Ansprüche,
- **dadurch gekennzeichnet, dass**
- das Dosierröhrchen (12.2) von der Ringdüse (16.2) wegbewegbar ist.

4. Dosiervorrichtung nach einem der vorstehenden Ansprüche,
- **dadurch gekennzeichnet, dass**
- ein für das Schüttgut (56, 56.2) nicht durchlässiges, für gasförmiges Medium aber durchlässiges Filtermedium (38) im Inneren des Dosierröhrchens (12, 12.2) vorhanden ist, welches einen Innenraum (40) im Endbereich (14) des Dosierröhrchens so begrenzt, dass durch das Filtermedium (38) hindurch und aus einem Bett aus Schüttgut (56) heraus Schüttgut (56.2) in diesen Innenraum (40) hineinsaugbar ist.

5. Dosiervorrichtung nach einem der vorstehenden Ansprüche,
- **dadurch gekennzeichnet, dass**
- die Filteröffnungen durch Erodieren herstellbar sind.

6. Dosiervorrichtung nach einem der vorstehenden Ansprüche,
- **dadurch gekennzeichnet, dass**
- das Filtermedium (38) in axialer Richtung des Dosierröhrchens (12, 12.2) verstellbar ist.

7. Dosiervorrichtung nach einem der vorstehenden Ansprüche,
- **dadurch gekennzeichnet, dass**
- Luft als gasförmiges Medium nutzbar ist.

## Claims

1. Metering apparatus (10, 10.2) for granular bulk materials (56), such as, for example, powders, granulates or pellets,
- with a metering tube (12, 12.2) which, for filling with a metered quantity (56.2) of such bulk material, can be dipped with its open one end region (14) into bulk material (56),
- with a device for sucking bulk material (56.2) into the end region (14) of the metering tube,
- with a device for generating a relative movement (64), at least in the dipped-in state of the metering tube (12, 12.2), between the metering tube (12, 12.2) and the bulk material (56) in the transverse direction with respect to the longitudinal axis (44) of the metering tube,
- during the filling of the metering tube the bulk material (56) flowing into the latter in a first flow direction and, during emptying, flowing out of the metering tube in the flow direction opposite to this,
**characterized in that,** at least in the dipped-in state of the metering tube, a ring nozzle for blowing a gaseous medium at least in the region of the lower end (22) of the end region (14) is present such that a blowing stream can be generated in a transverse direction (34) with respect to the longitudinal axis (44) of the metering tube.

2. Metering apparatus according to Claim 1,
- **characterized in that**
- at least in the dipped-in state of the metering tube, the ring nozzle is present on the metering tube immovably in relation to the latter.

3. Metering apparatus according to one of the preceding claims,
- **characterized in that**
- the metering tube (12.2) can be moved away from the ring nozzle (16.2).

4. Metering apparatus according to one of the preceding claims,
- **characterized in that**
- a filter medium (38) impermeable to the bulk material (56, 56.2), but permeable to a gaseous medium, is present inside the metering tube (12, 12.2) and delimits an inner space (40) in the end region (14) of the metering tube such that bulk material (56.2) can be sucked through the filter medium (38) and out of a bed of bulk material (56) into this inner space (40).

5. Metering apparatus according to one of the preceding claims,
- **characterized in that**
- the filter orifices can be produced by erosion.

6. Metering apparatus according to one of the preceding claims,
- **characterized in that**
- the filter medium (38) is adjustable in the axial direction of the metering tube (12, 12.2).

7. Metering apparatus according to one of the preceding claims,
- **characterized in that**
- air can be used as the gaseous medium.

## Revendications

1. Dispositif de dosage (10, 10.2) pour matériaux ou marchandises granulaires en vrac (56) comme, par exemple, des poudres, des granulés ou des boulettes, comprenant
- un petit tube doseur (12, 12.2) qui, en vue de l'emplissage par une quantité dosée (56.2) de tels matériaux ou marchandises en vrac, peut être plongé dans lesdits matériaux en vrac (56) par l'une (14) de ses régions extrêmes ouverte,
- un système pour faire pénétrer, par aspiration, des matériaux en vrac (56.2) dans la région extrême (14) du petit tube doseur,
- un système pour engendrer un mouvement relatif (64), au moins à l'état enfoncé du petit tube doseur (12, 12.2), entre ledit petit tube doseur (12, 12.2) et les matériaux en vrac (56), dans une direction transversale vis-à-vis de l'axe longitudinal (44) du petit tube doseur,
- sachant que, lors de l'emplissage du petit tube doseur, les matériaux en vrac (56) affluent dans ce dernier dans une première direction d'écoulement et sortent du petit tube doseur, lors du vidage, dans la direction d'écoulement opposée,
- **caractérisé par le fait**
- **qu'**au moins à l'état enfoncé du petit tube doseur, une buse annulaire est présente au moins dans la zone de l'extrémité inférieure (22) de la région extrême (14), en vue de l'insufflation d'un agent gazeux, de telle sorte qu'un courant d'insufflation puisse être engendré dans une direction (34) transversale vis-à-vis de l'axe longitudinal (44) du petit tube doseur.

2. Dispositif de dosage selon la revendication 1,
- **caractérisé par le fait**
- **qu'**au moins à l'état enfoncé du petit tube doseur, la buse annulaire est montée sur le petit tube doseur avec immobilisation vis-à-vis de ce dernier.

3. Dispositif de dosage selon l'une des revendications précédentes,
- **caractérisé par le fait que**
- le petit tube doseur (12.2) peut être éloigné de la buse annulaire (16.2).

4. Dispositif de dosage selon l'une des revendications précédentes,
- **caractérisé par**
- la présence, dans l'espace interne du petit tube doseur (12, 12.2), d'un agent filtrant (38) qui est imperméable aux matériaux en vrac (56, 56.2), mais perméable à un agent gazeux, et qui délimite un compartiment intérieur (40), dans la région extrême (14) dudit petit tube doseur, de telle sorte que des matériaux en vrac (56.2) puissent être introduits par aspiration dans ce compartiment intérieur (40) en traversant ledit agent filtrant (38), et en provenance d'un lit de matériaux en vrac (56).

5. Dispositif de dosage selon l'une des revendications précédentes,
- **caractérisé par le fait que**
- les orifices de filtration peuvent être façonnés ou fabriqués par un travail d'érosion.

6. Dispositif de dosage selon l'une des revendications précédentes,
- **caractérisé par le fait que**
- l'agent filtrant (38) peut être réglé dans la direction axiale du petit tube doseur (12, 12.2).

7. Dispositif de dosage selon l'une des revendications précédentes,
- **caractérisé par le fait que**
- de l'air peut être utilisé en tant qu'agent gazeux.
